# EUROPÄISCHE PATENTSCHRIFT

(11) **EP 2 982 966 B1**
(45) Veröffentlichungstag und Bekanntmachung des Hinweises auf die Patenterteilung: **28.09.2022**
(21) Anmeldenummer: 14179748.0
(22) Anmeldetag: 04.08.2014
(51) Int. Cl.: G01N 21/64, G01J 3/44

(54) **Messgerät und Verfahren zum Bestimmen einer Messgröße**
Measuring device and method for determining a measurement value
Appareil de mesure et procédé de détermination d'une grandeur de mesure

(43) Veröffentlichungstag der Anmeldung: 10.02.2016
(73) Patentinhaber: Berthold Technologies GmbH & Co. KG, 75323 Bad Wildbad (DE)
(72) Erfinder: Berthold, Fritz, 75173 Pforzheim (DE); Freiburger, Ewald, 75245 Neulingen (DE); Reuter, Wilfried, 75334 Straubenhardt (DE)
(74) Vertreter: Patentanwälte Ruff, Wilhelm, Beier, Dauster & Partner mbB

(56) Entgegenhaltungen:
- EP-A1- 2 428 792
- EP-A2- 0 442 295
- US-A- 4 626 684
- US-A1- 2004 239 923
- US-B2- 6 992 761

## Beschreibung

Die Erfindung betrifft ein Messgerät, insbesondere in Form eines Fluorometers, Absorptionsphotometers, Absorptionsspektrometers oder Multilabel-Readers, sowie ein Verfahren zum Bestimmen einer Messgröße.

Zur Messung der Fluoreszenz von Proben in Mikroplatten dienen sogenannte Mikroplatten-Fluorometer. Häufig können derartige Messgeräte auch noch andere Messungen wie Lichtabsorption oder Biolumineszenz oder Chemolumineszenz durchführen und heißen dann Multimode-Reader.

Es gibt Mikroplatten mit 24, 96, 384, 1536 und sogar noch mehr individuellen Probengefäßen oder Näpfchen. Je mehr Näpfchen in einer Platte gemessen werden sollen, desto länger dauert die Messung pro Mikroplatte.

Üblicherweise wird mit Hilfe einer Transporteinheit in Form eines x/y-Kreuztisches nacheinander jede einzelne Probe in Messposition gebracht, bleibt dort während der Messung stehen, dann erfolgt der Transport der nächsten Probe in die Messposition, usw.

Selbst bei kurzen Messzeiten von z. B. nur 0,2 s pro Probe dauert die Gesamtzeit für eine Platte mit 1536 Näpfchen über 10 Minuten, wobei der größte Teil der Zeit für den Transport von einer Probenposition zur nächsten benötigt wird. Bei sogenannten Screening-Untersuchungen wird jedoch ein sehr hoher Probendurchsatz verlangt, eine 1536er Platte soll in etwa 30 s gemessen sein, wobei Anforderungen hinsichtlich Empfindlichkeit und Genauigkeit allerdings etwas reduziert sind.

Der schnelle Probendurchsatz ist dadurch zu erreichen, dass die einzelnen Proben ohne anzuhalten (so genannte on-the-fly Messung) durch die Messposition transportiert werden und eine schnelle Messung in der kurzen Zeit durchgeführt wird, in der sich eine Probe exakt in Messposition befindet.

Wenn als Lichtquelle eine Blitzlampe benutzt wird, bedeutet dies, dass zur Messung jeder einzelnen Probe nur ein einziger Blitz erzeugt wird, der dann ausgelöst wird, wenn sich eine Probe genau in Messposition befindet, denn bedingt durch den schnellen Weitertransport der Mikroplatte würden weitere Blitze teilweise schon auf die Zwischenwände zwischen den Probenpositionen treffen. Dies würde zu Fehlmessungen führen.

Einige der wichtigsten Fluorophore zeigen eine prompte Fluoreszenz, d. h. dass die Fluoreszenzemission praktisch gleichzeitig mit der Fluoreszenz-Anregung erfolgt und der Zeitverlauf des Messsignals praktisch die gleiche Dynamik aufweist wie die Lichtemission der Lichtquelle.

Für einen optischen Detektor besteht somit die Aufgabe, den auftreffenden Lichtblitz möglichst genau und empfindlich zu quantisieren, darüber hinaus schnell genug, so dass die Messung der nächsten Probe störungsfrei ermöglicht wird.

In der US 6,992,761 B2 ist beschrieben, dass an einer Anode eines optischen Detektors in Form eines Photomultipliers über einen Arbeitswiderstand ein elektrisches Signal abgenommen und einem Integrator zugeführt wird. Dabei wird ein Kondensator des Integrators mit dem Strom des Signals aufgeladen. Nach Ablauf einer vorgewählten Zeit oder bei Erreichen einer Maximalspannung wird der Spannungswert mittels eines A/D-Wandlers digitalisiert und der Kondensator anschließend aktiv entladen.

Die EP 2 428 792 A1 zeigt einen Mikroplatten-Reader mit einer Transporteinheit für eine Mikroplatte, wobei die Mikroplatte eine Anzahl von Probengefäßen aufweist, in denen zu analysierende Proben enthalten sind, wobei die Transporteinheit dazu ausgebildet ist, die in den Probengefäßen enthaltenen Proben sequentiell in eine Messposition zu verfahren, einer gepulste Lichtquelle, die dazu ausgebildet ist, eine sich in der Messposition befindliche Probe mit mindestens einem Lichtimpuls zu beaufschlagen, und einem lichtempfindlichen Mess-Detektor, der dazu ausgebildet ist, Licht, das durch Beaufschlagen der Probe mit dem Lichtimpuls bewirkt ist, in ein elektrisches Messsignal zu wandeln.

Die EP 0 442 295 A2 zeigt ein Frequenz-Fluorometer mit einem Bandpass, dessen Filterparameter von einer Erregerfrequenz von Lichtpulsen abhängig ist.

Der Erfindung liegt die Aufgabe zugrunde, ein Messgerät, insbesondere in Form eines Fluorometers, Absorptionsphotometers, Absorptionsspektrometers oder Multilabel-Readers, sowie ein Verfahren zum Bestimmen einer Messgröße zur Verfügung zu stellen, die eine hohe Messempfindlichkeit bei hohem Messdurchsatz ermöglichen.

Die Erfindung löst diese Aufgabe durch ein Messgerät nach Anspruch 1 oder 2 und ein Verfahren nach Anspruch 13.

Das Messgerät kann beispielsweise ein Fluorometer, ein Absorptionsphotometer, ein Absorptionsspektrometer oder ein Multilabel-Reader sein.

Das Messgerät weist eine Transporteinheit für eine herkömmliche Mikroplatte auf. Die Mikroplatte weist eine Anzahl von Probengefäßen beispielsweise in Form von Näpfchen auf. In den Probengefäßen sind zu analysierende Proben enthalten. Insoweit sei auch auf die einschlägige Fachliteratur verwiesen. Die Transporteinheit ist dazu ausgebildet, die in den Probengefäßen enthaltenen Proben sequentiell in mindestens eine Messposition zu verfahren. Hierzu kann die Transporteinheit beispielsweise eine Relativbewegung, insbesondere in X-Y-Richtung, zwischen einer Messanordnung des Messgeräts und Mikroplatte bewirken.

Das Messgerät weist weiter mindestens eine gepulste Lichtquelle auf, die dazu ausgebildet ist, eine sich in der Messposition befindliche Probe mit mindestens einem Lichtimpuls bzw. Lichtblitz zu beaufschlagen. Wenn mehrere Messpositionen vorgesehen sind, kann für eine jeweilige Messposition eine gepulste Lichtquelle vorgesehen sein.

Das Messgerät weist weiter mindestens einen lichtempfindlichen Mess-Detektor auf, der dazu ausgebildet ist, Licht, das durch Beaufschlagen der Probe mit dem Lichtimpuls bewirkt ist, in ein elektrisches Messsignal zu wandeln. Wenn mehrere Messpositionen vorgesehen sind, kann für eine jeweilige Messposition ein lichtempfindlicher Mess-Detektor vorgesehen sein.

Das Messgerät weist weiter mindestens ein elektrisches Bandpassfilter auf, dessen Filterparameter, beispielsweise dessen Eckfrequenzen, Grenzfrequenzen, Mittenfrequenz, usw., von einer Dauer des mindestens einen Lichtimpulses abhängen, wobei das elektrische Bandpassfilter dazu ausgebildet ist, ein vom elektrischen Messsignal abhängiges Filtereingangssignal in Abhängigkeit von den Filterparametern zu filtern, um ein Filterausgangssignal zu erzeugen. Die Filterparameter werden derart in Abhängigkeit von der Dauer des mindestens einen Lichtimpulses gewählt, dass der basierend auf der Probe erzeugte, zu messende Lichtimpuls für die weitere Impulsverarbeitung geeignet ist. Typisch wird vorliegend bei Fluoreszenzmessungen die so genannte prompte Fluoreszenz zu Grunde gelegt, bei der die Fluoreszenzemission praktisch gleichzeitig mit der Fluoreszenz-Anregung erfolgt, so dass der Zeitverlauf des Messsignals die gleiche Dynamik aufweist wie der anregende Lichtimpuls. Einflüsse beispielsweise eines Fluorophor können daher vernachlässigt werden.

Das elektrische Bandpassfilter kann ein Bandpassfilter höherer Ordnung sein, beispielsweise ein Bessel-Bandpassfilter sechster Ordnung. Das elektrische Bandpassfilter kann ein Bandpassfilter mit Gauss-Formung höherer Ordnung, beispielsweise dritter Ordnung, sein. Es ist möglich, die Filterparameter und/oder den Typ des Filters dynamisch umzuschalten.

Das Messgerät weist weiter mindestens einen elektrischen Verstärker auf, der dazu ausgebildet ist, ein vom Messsignal abhängiges Verstärkereingangssignal zu verstärken, um ein Verstärkerausgangssignal zu erzeugen.

Das Messgerät weist weiter eine Auswerteeinheit auf, die dazu ausgebildet ist, das Filterausgangssignal oder das Verstärkerausgangssignal zum Bestimmen einer Messgröße, beispielsweise einer Lichtmenge, die indikativ für eine Reaktionskinetik sein kann, auszuwerten. Die Messgröße kann beispielsweise eine Analytenkonzentration repräsentieren.

Das Messgerät kann einen lichtempfindlichen Referenz-Detektor und eine Lichtabzweigeeinheit aufweisen. Die Lichtabzweigeeinheit ist dazu ausgebildet, einen vorgegebenen Teil (beispielsweise 10 %) des mittels der gepulsten Lichtquelle erzeugten Lichtimpulses abzuzweigen und den Referenz-Detektor mit dem abgezweigten Teil des Lichtimpulses zu beaufschlagen. Der lichtempfindliche Referenz-Detektor ist dazu ausgebildet, basierend auf dem abgezweigten Teil des Lichtimpulses ein elektrisches Referenzsignal zu erzeugen. Die Auswerteeinheit ist dazu ausgebildet, das elektrische Referenzsignal oder ein aus dem elektrischen Referenzsignal beispielsweise durch Filtern und Verstärken abgeleitetes Signal beim Bestimmen der Messgröße zu berücksichtigen, beispielsweise indem sie das elektrische Messsignal auf das bzw. mit dem elektrische(n) Referenzsignal normiert.

Die Genauigkeit einer Absorptions- oder Fluoreszenzmessung hängt wesentlich ab von der Stabilität der Lichtquelle. Im Falle von Blitzlichtquellen beobachtet man sowohl eine mehr oder weniger starke statistische Schwankung von Lichtimpuls zu Lichtimpuls als auch eine eher längerfristige Drift der Lichtemission. Dazu kann noch eine Änderung des Lichtspektrums kommen. Bei stationären Messungen kann die Genauigkeit einer Messung durch Wiederholungsmessungen und Mittelwertbildung erhöht werden. Bei kontinuierlichem Messbetrieb im sogenannten on-the-fly Modus dagegen muss schon durch Quantisierung eines einzelnen Lichtimpulses ausreichende Genauigkeit erreicht werden.

Um die Schwankungen der Lichtemission ausgleichen zu können, wird ein kleiner Teil des auf die Probe gerichteten Lichtimpulses einem Referenz-Detektor zugeführt. Wird eine Weisslicht-Quelle, beispielswiese eine Xe-Blitzlampe, verwendet, so sollte ein durch ein wellenlängenselektierendes Modul ausgewählter Spektralbereich bei Mess- und Referenzdetektor identisch sein.

Die Lichtabzweigeeinheit kann beispielswiese ein Glasplättchen aufweisen, das schräg in einem Mess- bzw. Lichtpfad des Lichtimpulses angeordnet ist, wobei das Glasplättchen durch Spiegelung einen kleinen Anteil, z.B. 5 % bis 10 %, dem Referenz-Detektor zuführt. Man kann beispielsweise für den vom Referenz-Detektor ermittelten Messwert bzw. das vom Referenz-Detektor erzeugte Referenzsignal einen Sollwert S definieren. Wird dieser Sollwert genau erreicht, so wird das Messsignal nicht korrigiert. Gibt es dagegen eine Abweichung des Referenzsignals vom Sollwert S um den Faktor F, so wird das Messsignal mit dem Kehrwert von F multipliziert.

Bei Verwendung eines Doppelmonochromators kann es zweckmäßig sein, das Glasplättchen zwischen ein zweites Beugungsgitter und einen Ausgangsspalt zu positionieren. In diesem Bereich ist der - spektral bereits selektierte - Lichtstrahl konvergent, und wenn die Reflektionszone des Glasplättchens äquidistant zum Ausgangsspalt und zum Referenz-Detektor ist, so wird der Referenzstrahl auf den Referenzdetektor fokussiert.

Der Referenz-Detektor kann eine Photodiode sein, die - im Gegensatz zu Detektoren mit interner Verstärkung wie einem Photomultiplier - ohne interne Verstärkung und somit praktisch driftfrei arbeitet.

Auch der Mess-Detektor kann ein Halbleiterdetektor sein, wie es beispielsweise bei einem Photometer oder einem Multi-Label-Reader die Photodiode zur Absorptionsmessung ist. In dieser Anordnung können die Schwankungen der Lichtquelle wie oben beschrieben praktisch völlig kompensiert werden.

Je nach Mikroplattengeometrie, Lichtstrahldurchmesser, Vorschubgeschwindigkeit und Blitzfrequenz kann es auch bei kontinuierlichem Vorschub möglich sein, mehr als nur einen Lichtimpuls bzw. Lichtblitz zur Messung einer einzelnen Probe zu erzeugen, ohne dass eine Fehlmessung verursacht wird, beispielsweise deshalb, da der Lichtstrahl teilweise auf eine Zwischenwand zwischen den einzelnen Probengefäßen trifft. Anschließend kann man die verschiedenen von jeweils einer Probe herrührenden Messergebnisse mitteln oder in anderer Weise verrechnen.

Ebenso kann man eine einzelne Mikroplatte mehrmals nacheinander im on-the-fly Modus messen und die Ergebnisse für einzelne Probengefäße anschließend mitteln und Fehlerrechnungen etc. durchführen, wobei die Gesamtmesszeit immer noch signifikant kürzer sein kann als bei einer diskontinuierlichen Messung.

Das Filtereingangssignal ist das Messsignal und das Verstärkereingangssignal ist das Filterausgangssignal, oder das Verstärkereingangssignal ist das Messsignal und das Filtereingangssignal ist das Verstärkerausgangssignal.

Das Bandpassfilter kann ausschließlich passive Bauelemente aufweisen, wie beispielsweise Widerstände, Kondensatoren und/oder Spulen.

Der Verstärker kann dazu ausgebildet sein, eine frequenzunabhängige Verstärkung durchzuführen.

Das Bandpassfilter kann mittels einer Rückkopplung innerhalb eines Verstärkungspfads des Verstärkers gebildet sein, d.h. der Verstärker verstärkt frequenzabhängig.

Eine Bandpassfilter-Zeitkonstante kann größer als eine Dauer des Lichtimpulses sein.

Das Bandpassfilter und die Auswerteeinheit können durch einen digitalen Signalprozessor oder ein FPGA gebildet sein, wobei der digitale Signalprozessor oder das FPGA dazu ausgebildet ist, aus dem Filtereingangssignal eine der Intensität des Lichtimpulses proportionale Messgröße zu erzeugen.

Die Auswerteeinheit kann dazu ausgebildet sein, das Filterausgangssignal und/oder das Verstärkerausgangssignal derart zum Bestimmen der Messgröße auszuwerten, dass die Messgröße von einem Maximum des impulsgeformten Messsignals abhängig ist.

Das Messgerät kann dazu ausgebildet sein, den Verstärker und/oder das Bandpassfilter und/oder die Auswerteeinheit nur für die Dauer des Lichtimpulses zu aktivieren, um Störeinflüsse außerhalb des interessierenden Messzeitbereichs zu unterdrücken.

Zur Vergrößerung des Dynamikumfangs kann das Messgerät mehrere parallel geschaltete Verstärker mit unterschiedlichen Verstärkungsfaktoren und eine mit den Verstärkern gekoppelte Auswahlschaltung aufweisen. Die Auswahlschaltung ist zunächst dazu ausgebildet, diejenigen Verstärkerausgangssignale zu verwerfen, die aufgrund ihres Pegels bzw. Maximums ihres Verstärkereingangssignals und ihres zugehörigen Verstärkungsfaktors übersteuert sind. Ein Verstärkerausgangssignal ist dann übersteuert, wenn es einem maximal möglichen Pegel des Verstärkerausgangssignals entspricht, so dass sich das Verstärkerausgangssignal selbst dann nicht mehr vergrößert, wenn sich das Verstärkereingangssignal vergrößert. Die Auswahlschaltung ist weiter dazu ausgebildet, unter den verbleibenden Verstärkerausgangssignalen dasjenige zum Bestimmen der Messgröße auszuwählen und zur Weiterverarbeitung weiterzuleiten, das mit dem größten Verstärkungsfaktor verstärkt ist. Da die analoge Aussteuerung von elektrischen Baugruppen, beispielsweise Verstärkern, maximal bis zur Versorgungsspannung möglich ist, ist entsprechend der dynamische Bereich limitiert. Um den dynamischen Bereich zu erweitern, kann man mehrere Schaltungen wie oben beschrieben mit unterschiedlichen Verstärkungsfaktoren parallel schalten und erhält somit gleichzeitig mehrere Messwerte desselben Signals, wobei das verstärkte Signal als gültig zu wählen ist, dessen Maximum im linearen Bereich seines Verstärkers liegt. Typischerweise wählt man z.B. bei einem Zweikanalsystem immer das Signal des empfindlicheren Kanals bis zu einer maximalen Schwelle als gültig, und falls diese überschritten wird, das Signal des unempfindlichen Kanals. Damit kann man bereits einen dynamischen Bereich von ca. 6 Dekaden erreichen, was für typische Fluoreszenzmessungen ausreicht. Die zwei Bereiche werden über einen Faktor aneinander angepasst. Entsprechend ist die Situation bei Absorptionsmessungen. Die gemessene Lichtmenge wird in OD-Einheiten umgerechnet.

Der lichtempfindliche Mess-Detektor und/oder der lichtempfindliche Referenz-Detektor kann/können ein Photomultiplier (Photoelektronenvervielfacher, kurz Photovervielfacher, engl. photomultiplier tube, PMT) oder ein Halbleiterphotosensor sein. Halbleiterphotosensoren können beispielsweise Photodioden, Avalanche Photodioden (APD), Single-Photon Avalanche Dioden (SPAD), Silicon Photomultiplier (SiPM), usw. umfassen.

Die gepulste Lichtquelle kann eine Gasentladungslampe oder ein gepulster Laser sein.

Das Verfahren zum Bestimmen einer Messgröße mittels des oben beschriebenen Messgeräts weist die Schritte auf:
a) Beaufschlagen einer in einem Probengefäß einer Mikroplatte angeordneten Probe mit mindestens einem Lichtimpuls,
b) Umwandeln von Licht, das durch Beaufschlagen der Probe mit dem Lichtimpuls bewirkt ist, in ein elektrisches Messsignal,
c) Impulsformen des elektrischen Messsignals mittels elektrischem Bandpassfiltern und elektrischem Verstärken des elektrischen Messsignals, wobei das Bandpassfiltern mit Filterparametern durchgeführt wird, die von einer Dauer des mindestens einen Lichtimpulses abhängen, und
d) Auswerten des impulsgeformten Messsignals zum Bestimmen der Messgröße.

Das Verfahren kann weiter folgende Schritte aufweisen:
e) Abzweigen eines Teils des mittels der gepulsten Lichtquelle erzeugten Lichtimpulses,
f) Umwandeln von Licht, das durch den abgezweigten Teil des Lichtimpulses bewirkt ist, in ein elektrisches Referenzsignal,
g) Impulsformen des elektrischen Referenzsignals mittels elektrischem Bandpassfiltern und elektrischem Verstärken des elektrischen Referenzsignals, wobei das Bandpassfiltern mit den Filterparametern durchgeführt wird, wobei in Schritt d) das impulsgeformte Messsignal und das impulsgeformte Referenzsignal zum Bestimmen der Messgröße ausgewertet werden.

Die Schritte a) bis d) bzw. a) bis g) können für alle in den Probengefäßen der Mikroplatte angeordneten Proben wiederholt werden, wobei die Mikroplatte hierzu kontinuierlich verfahren wird.

Alternativ kann die Mikroplatte zum Bestimmen einer jeweiligen Messgröße angehalten werden, wobei die Probe mit mehreren Lichtimpulsen zum Erzeugen mehrerer impulsgeformter Messsignale beaufschlagt wird, wobei die mehreren impulsgeformten Messsignale zum Bestimmen der Messgröße ausgewertet werden.

Erfindungsgemäß wird anstelle einer herkömmlichen Integratorschaltung ein Impulsverstärker verwendet, der bevorzugt nur für die Länge des Lichtblitzes bzw. Lichtimpulses aktiviert ist und der zur Pulsformung beispielsweise ein RC-Glied mit einer geeigneten Zeitkonstante in der Rückkopplung ausweist. Die Pulsformung kann auch vor dem Verstärkereingang mit passiven Komponenten realisiert sein. Aufgrund der Wirkung als Bandpass werden dabei für das Messergebnis nicht wesentliche Signalanteile herausgefiltert und Stör- sowie Rauschanteile wirksam unterdrückt. Das so gewonnene Nutzsignal ist proportional zur gesamten in einem Lichtimpuls enthaltenen Lichtmenge. Es kann die relevante Messgröße beispielweise entweder mit einer nachgeschalteten analogen Scheitelwertbestimmung oder aber mit einer nachfolgenden digitalen Signalverarbeitung wie z.B. mit einem DSP oder einem FPGA gewonnen werden.

Um die gesamte in einem Lichtimpuls enthaltene Lichtmenge möglichst genau zu bestimmen, kann eine Zeitkonstante für das RC-Glied des Bandpasses derart gewählt werden, dass diese wesentlich größer, beispielsweise 2 bis 10 mal größer, als die Summe einer Abklingzeit des Fluoreszenzlichtes und der Dauer des Lichtimpulses ist. Aufgrund der typischerweise vorliegenden prompten Fluoreszenz liegt die Abklingzeit im ns-Bereich und die Pulsdauer des Lichtblitzes beträgt z.B. bei einer Xe- Blitzlampe circa 1 µs, so dass die Abklingzeit vernachlässigbar ist. Es ergibt sich folglich typisch eine RC-Zeitkonstante von einigen µs. Damit erhält man ein der gesamten in einem Lichtblitz enthaltenen Lichtmenge proportionales Signal, wobei der Anstieg des Signals durch die Abklingzeit und die Pulsbreite des Fluoreszenzlichtes und der Abfall des Signals durch die gewählte RC-Zeitkonstante definiert sind.

Zum Erhalt eines positiven analogen Signals für die Weiterverarbeitung wird diese Pulsformung vorzugsweise mit einem invertierenden Operationsverstärker mit geeigneter Verstärkung und einem oder mehreren RC-Gliedern in der Rückkopplung durchgeführt.

Bei einer digitalen Signalverarbeitung z.B. mit einem DSP oder FPGA wird dieses Signal mit Hilfe eines A/D-Wandlers innerhalb oder außerhalb des Prozessors digitalisiert und dann digital die dem impulsgeformten Signal proportionale Messgröße durch entsprechende Filterung, Formung und Auswertung bzgl. Amplitude des Signals gewonnen.

Für die analoge Weiterverarbeitung des Signals kann dieses einer Schaltung zur Scheitelwerterkennung zugeführt werden, wobei der Scheitelwert des Signals mit einem leckstromarmen Kondensator bis zu dessen Entladung gehalten wird. Der Kondensator kann mit einem sehr hochohmigen Spannungsfolger verbunden sein, der das Signal Impedanz gewandelt an den A/D-Wandler ausgibt.

Die Digitalisierung des Scheitelwerts des Signals erfolgt typisch 2 bis 10 µs nach dem Erreichen des Scheitelwerts und der genaue Zeitpunkt dafür ist mit dem Puls zur Erzeugung des Lichtblitzes synchronisiert. Danach kann die komplette Entladung des Kondensators durch Verbindung des Kondensators beispielsweise mit Massepotential über einen elektronischen Schalter erfolgen. Damit sich keine störende Restladung, erzeugt von Leckströmen vor dem Lichtpuls, auf dem Kondensator befindet, muss dieser kurz davor ebenfalls entladen werden. Alternativ dazu kann man mit einem Feldeffekt-Transistor als Schalter den Verstärker nur für die Dauer des Lichtblitzes zugänglich machen und nur das Messsignal durchlassen oder aber den Kondensator permanent mit Ausnahme für die Dauer des Lichtblitzes und etwas darüber hinaus bis kurz nach der Digitalisierung entladen.

Bei einer typischen Fluoreszenzmessung wird bevorzugt als Lichtquelle eine Xe-Blitzlampe eingesetzt, welche beispielsweise mit einer relativ kleinen Frequenz von z.B. 50 - 100 Hz getaktet wird, da hierbei die Intensität pro Blitz sehr hoch ist, wie es besonders bei on-the-fly Messungen mit einem Blitz pro Messung von Vorteil ist. Auch Messungen bei denen über n Blitze gemittelt wird profitieren hinsichtlich Ihres Messergebnisses von der hohen Lichtmenge.

Der Lichtblitz einer Xe-Blitzlampe weist eine Gauss-ähnliche Pulsform mit einer Halbwertsbreite von circa 1 µs und einen längeren Ausläufer am Ende des Blitzes von mehreren Mikrosekunden auf. Deshalb kann die typische Zeit für die Freischaltung des Verstärkers bzw. die Aktivierung der Scheitelwerterkennungsschaltung ca. 10 µs betragen.

Das erfindungsgemäße Verfahren wie oben erwähnt ist auch vorteilhaft anzuwenden, wenn jede Probe stationär mit einer Vielzahl von Blitzen beaufschlagt wird, sodass durch Verrechnungen wie Mittelung oder Fehleranalysen die Genauigkeit weiter gesteigert werden kann.

Es kann auch vorteilhaft sein, dieselbe Mikroplatte mehrmals nacheinander im on-the-fly Modus auszumessen und die Ergebnisse anschließend zu mitteln und Fehler-Rechnungen aufzustellen. Dadurch kann gegenüber diskontinuierlichen Messungen noch immer viel Zeit gespart werden.

Die Erfindung wird nachfolgend unter Bezugnahme auf die Zeichnungen detailliert beschrieben. Hierbei zeigt schematisch:
- Fig. 1: eine Mikroplatten-Transporteinheit eines erfindungsgemäßen Messgeräts,
- Fig. 2: ein schematisches Blockschaltbild einer Messanordnung eines erfindungsgemäßen Messgeräts,
- Fig. 3: ein Blockschaltbild einer optionalen Scheitelwertbestimmungsschaltung des erfindungsgemäßen Messgeräts und
- Fig. 4: eine Schaltung zur Erhöhung des dynamischen Bereichs eines erfindungsgemäßen Messgeräts.

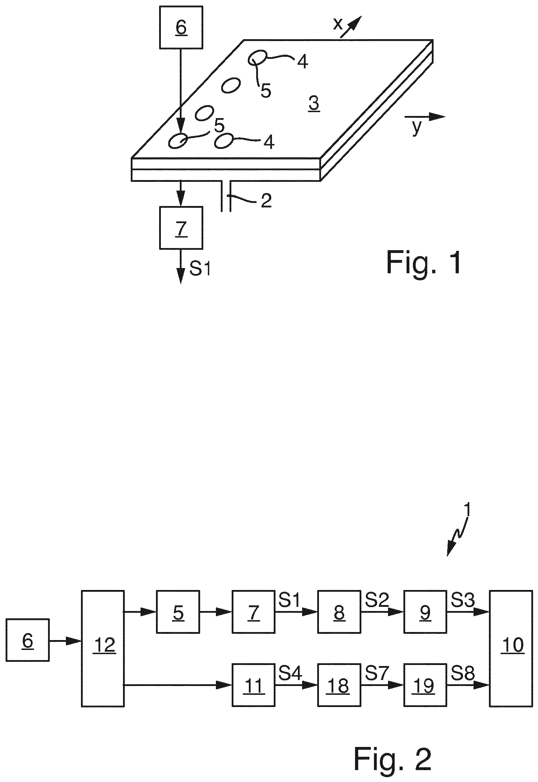

Fig. 1 zeigt eine Transporteinheit 2 für eine herkömmliche Mikroplatte 3, wobei die Mikroplatte 3 eine Anzahl, beispielsweise zwischen 24 und 1536, von Probengefäßen bzw. Näpfchen 4 aufweist, in denen jeweils zu analysierende Proben 5 enthalten sind. Die Transporteinheit 2 ist Teil eines nachfolgend näher beschriebenen Messgeräts 1, beispielsweise eines Fluorometers, Absorptionsphotometers, Absorptionsspektrometers oder Multilabel-Readers. Die Transporteinheit 2 ist dazu ausgebildet, die in den jeweiligen Probengefäßen 4 enthaltenen Proben 5 sequentiell in eine definierte Messposition zu verfahren.

Fig. 2 zeigt ein schematisches Blockschaltbild einer Messanordnung eines erfindungsgemäßen Messgeräts 1.

Die Messanordnung weist eine gepulste Lichtquelle 6 in Form einer Xe-Blitzlampe auf, die dazu ausgebildet ist, eine sich in der Messposition befindliche Probe 5 mit genau einem Lichtimpuls bzw. Lichtblitz zu beaufschlagen.

Für den Fall von Fluoreszenzmessungen ist eine jeweilige Probe 5 mit einem Fluorophor mit prompter Fluoreszenz markiert. Durch Beaufschlagen der Probe 5 mit dem Lichtimpuls wird Licht in Form von Fluoreszenzlicht bewirkt bzw. erzeugt. Ein lichtempfindlicher Mess-Detektor 7 in Form eines herkömmlichen Photomultipliers ist dazu ausgebildet, das Fluoreszenzlicht in ein elektrisches Messsignal S1 zu wandeln. Die Lichtquelle 6 und der Mess-Detektor 7 sind hierbei typischerweise horizontal versetzt oberhalb der Mikroplatte 3 angeordnet. Im Übrigen sei hinsichtlich der grundlegenden Fluoreszenzmessung auch auf die einschlägige Fachliteratur verwiesen.

Für den Fall von Absorptionsmessungen, wie sie hoch schematisch in Fig. 1 dargestellt ist, wird die Probe 5 mit dem Lichtimpuls beaufschlagt, wobei der lichtempfindliche Mess-Detektor 7, hier in Form eines Halbleiterphotodetektors, durch die Probe 5 transmittiertes Licht in das elektrische Messsignal S1 wandelt. Die Lichtquelle 6 und der Mess-Detektor 7 sind hierbei typischerweise auf unterschiedlichen Seiten der Mikroplatte 3 bzw. Probe 5 angeordnet, wobei die Mikroplatte 3 bzw. deren Probengefäße 4 für Licht der Lichtquelle 6 im Wesentlichen durchlässig ist/sind. Im Übrigen sei hinsichtlich der grundlegenden Absorptionsmessung auch auf die einschlägige Fachliteratur verwiesen.

Ein elektrisches Bandpassfilter 8, dessen Filterparameter von einer Form des Lichtimpulses abhängen, ist dazu ausgebildet, das Messsignal S1 in Abhängigkeit von den Filterparametern zu filtern, um ein impulsgeformtes Filterausgangssignal S2 zu erzeugen.

Ein elektrischer Verstärker 9 ist dazu ausgebildet, das Filterausgangssignal S2 zu verstärken, um ein Verstärkerausgangssignal S3 zu erzeugen.

Eine Auswerteeinheit 10 ist dazu ausgebildet, das Verstärkerausgangssignal S3 zum Bestimmen einer Messgröße auszuwerten. Beispielsweise kann die Auswerteeinheit 10 dazu ausgebildet sein, das Verstärkerausgangssignal S3 derart zum Bestimmen der Messgröße auszuwerten, dass die Messgröße von einem Maximum bzw. Scheitelwert des Messsignals S1 bzw. S3 abhängig ist.

Es versteht sich, dass die Reihenfolge von Bandpassfilter 8 und Verstärker 9 vertauscht sein kann und/oder dass das Bandpassfilter 8 und der Verstärker 9 zu einem frequenzselektiven Verstärker mit Bandpasscharakteristik zusammengefasst sein können.

Das Messgerät 1 bzw. dessen Messanordnung weist weiter einen lichtempfindlichen ReferenzDetektor 11 ebenfalls in Form eines Halbleiterphotodetektors und eine Lichtabzweigeeinheit 12 auf, die dazu ausgebildet ist, einen konstanten Anteil, beispielsweise zwischen 5% bis 10%, des mittels der gepulsten Lichtquelle 6 erzeugten Lichtimpulses abzuzweigen und den ReferenzDetektor 11 mit dem abgezweigten Teil des Lichtimpulses zu beaufschlagen. Die Lichtabzweigeeinheit 12 und der Referenz-Detektor 11 sind aus Gründen der einfacheren Darstellung in Fig. 1 nicht gezeigt.

Der lichtempfindliche Referenz-Detektor 11 ist dazu ausgebildet, basierend auf dem abgezweigten Teil des Lichtimpulses ein elektrisches Referenzsignal S4 zu erzeugen. Das Referenzsignal S4 wird mittels eines Bandpassfilters 18, dessen Filtercharakteristik der Filtercharakteristik des Bandpassfilters 8 entspricht, zum Erzeugen eines Signals S7 gefiltert, wobei das Signal S7 mittels eines Verstärkers 19 zum Erzeugen eines Signals S8 verstärkt wird. Das mittels des Verstärkers 19 verstärkte Referenzsignal S8 wird der Auswerteeinheit 10 zugeführt. Die Auswerteeinheit 10 ist dazu ausgebildet, das gefilterte und verstärkte elektrische Referenzsignal S8 beim Bestimmen der Messgröße zu berücksichtigen.

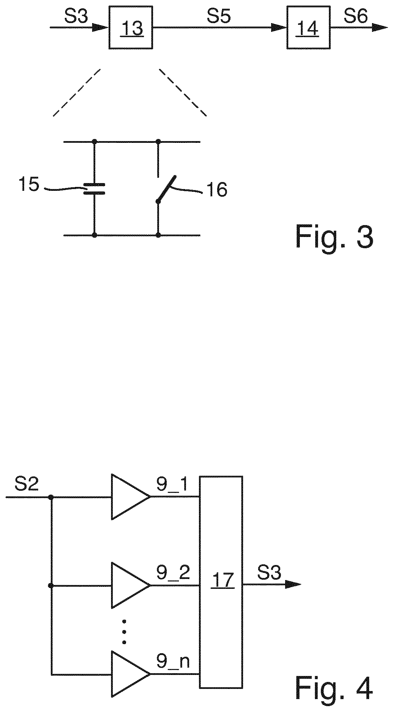

Fig. 3 zeigt ein Blockschaltbild einer optionalen Scheitelwertbestimmungsschaltung 13 und eines nachgeschalteten A/D-Wandlers 14 des Messgeräts 1.

In Ergänzung zu der in Fig. 2 gezeigten Ausführungsform, ist zwischen dem Ausgang des Verstärkers 9 und der Auswerteeinheit 10 die Scheitelwertbestimmungsschaltung 13 und der A/D-Wandler 14 angeordnet.

Die Scheitelwertbestimmungsschaltung 13 ist mit dem Verstärkerausgangssignal S3 beaufschlagt und dazu ausgebildet, einen Scheitelwert S5 des Verstärkerausgangssignals S3 zu bestimmen. Der A/D-Wandler 14 ist dazu ausgebildet, den Scheitelwert S5 in ein digitales Signal S6 zu wandeln. Die Auswerteeinheit 10 ist in dieser Ausführungsform dazu ausgebildet, das digitale Signal S6 zum Bestimmen der Messgröße auszuwerten.

Die Scheitelwertbestimmungsschaltung 13 weist einen Ladungskondensator 15 zum Ermitteln des Scheitelwerts auf, der nach der Digitalisierung des Scheitelwerts und vor einem erneuten Lichtimpuls entladen wird, wozu der Schalter 16 geschlossen wird.

Die Bandpassfilter 8 und 18 sowie die Auswerteeinheit 10 können durch einen digitalen Signalprozessor oder ein FPGA gebildet sein, wobei der digitale Signalprozessor oder das FPGA dazu ausgebildet sein kann, aus dem Filtereingangssignal, welches für diesen Fall beispielsweise mittels Verstärken des Messsignals S1 erzeugt werden kann, eine zur Intensität des Lichts, das durch Beaufschlagen der Probe 5 mit dem Lichtimpuls bewirkt ist, proportionale Messgröße zu erzeugen.

Die Verstärker 9 und 19, und/oder die Bandpassfilter 8 und 18 und/oder die Auswerteeinheit 10 können nur für die Dauer des Lichtimpulses aktiviert werden.

Fig. 4 zeigt eine optionale Schaltung zur Erhöhung des dynamischen Bereichs des Messgeräts 1. Die Schaltung weist mehrere parallel geschaltete Verstärker 9_1 bis 9_n mit jeweils unterschiedlichen Verstärkungsfaktoren auf. Weiter ist eine mit den Verstärkern 9_1 bis 9_n gekoppelte Auswahlschaltung 17 vorgesehen.

Die Auswahlschaltung 17 ist dazu ausgebildet, dasjenige Verstärkerausgangssignal auszuwählen, dessen Maximum im linearen Bereich seines zugehörigen Verstärkers liegt bzw. das nicht übersteuert/gesättigt ist und das innerhalb der Menge von nicht übersteuerten Verstärkerausgangssignalen eine maximale Verstärkung aufweist. Typischerweise wählt man z.B. bei einem Zweikanalsystem immer das Verstärkerausgangssignal des empfindlicheren Kanals bis zu einer Übersteuerungsschwelle als gültig, und falls diese überschritten wird, das Signal des unempfindlichen Kanals.

## Patentansprüche

1. Messgerät (1), insbesondere in Form eines Fluorometers, Absorptionsphotometers, Absorptionsspektrometers oder Multilabel-Readers, aufweisend:
- eine Transporteinheit (2) für eine Mikroplatte (3), wobei die Mikroplatte (3) eine Anzahl von Probengefäßen (4) aufweist, in denen zu analysierende Proben (5) enthalten sind, wobei die Transporteinheit (2) dazu ausgebildet ist, die in den Probengefäßen (4) enthaltenen Proben (5) sequentiell in eine Messposition zu verfahren,
- mindestens eine gepulste Lichtquelle (6), die dazu ausgebildet ist, eine sich in der Messposition befindliche Probe (5) mit mindestens einem Lichtimpuls zu beaufschlagen, und
- mindestens einen lichtempfindlichen Mess-Detektor (7), der dazu ausgebildet ist, Licht, das durch Beaufschlagen der Probe (5) mit dem Lichtimpuls bewirkt ist, in ein elektrisches Messsignal (S1) zu wandeln,
**gekennzeichnet durch**
- mindestens ein elektrisches Bandpassfilter (8), dessen Filterparameter von einer Dauer des mindestens einen Lichtimpulses abhängen, wobei das elektrische Bandpassfilter (8) dazu ausgebildet ist, ein Filtereingangssignal in Abhängigkeit von den Filterparametern zu filtern, um ein Filterausgangssignal (S2) zu erzeugen, wobei das Filtereingangssignal das Messignal (S1) ist,
- mindestens einen elektrischen Verstärker (9), der dazu ausgebildet ist, ein Verstärkereingangssignal (S2) zu verstärken, um ein Verstärkerausgangssignal (S3) zu erzeugen, wobei das Verstärkereingangssignal das Filterausgangssignal ist, und
- eine Auswerteeinheit (10), die dazu ausgebildet ist, das Verstärkerausgangssignal (S3) zum Bestimmen einer Messgröße auszuwerten.

2. Messgerät (1), insbesondere in Form eines Fluorometers, Absorptionsphotometers, Absorptionsspektrometers oder Multilabel-Readers, aufweisend:
- eine Transporteinheit (2) für eine Mikroplatte (3), wobei die Mikroplatte (3) eine Anzahl von Probengefäßen (4) aufweist, in denen zu analysierende Proben (5) enthalten sind, wobei die Transporteinheit (2) dazu ausgebildet ist, die in den Probengefäßen (4) enthaltenen Proben (5) sequentiell in eine Messposition zu verfahren,
- mindestens eine gepulste Lichtquelle (6), die dazu ausgebildet ist, eine sich in der Messposition befindliche Probe (5) mit mindestens einem Lichtimpuls zu beaufschlagen, und
- mindestens einen lichtempfindlichen Mess-Detektor (7), der dazu ausgebildet ist, Licht, das durch Beaufschlagen der Probe (5) mit dem Lichtimpuls bewirkt ist, in ein elektrisches Messsignal (S1) zu wandeln,
**gekennzeichnet durch**
- mindestens einen elektrischen Verstärker, der dazu ausgebildet ist, ein Verstärkereingangssignal zu verstärken, um ein Verstärkerausgangssignal zu erzeugen, wobei das Verstärkereingangssignal das Messsignal ist,
- mindestens ein elektrisches Bandpassfilter, dessen Filterparameter von einer Dauer des mindestens einen Lichtimpulses abhängen, wobei das elektrische Bandpassfilter dazu ausgebildet ist, ein Filtereingangssignal in Abhängigkeit von den Filterparametern zu filtern, um ein Filterausgangssignal zu erzeugen, wobei das Filtereingangssignal das Verstärkerausgangssignal ist, und
- eine Auswerteeinheit, die dazu ausgebildet ist, das Filterausgangssignal zum Bestimmen einer Messgröße auszuwerten.

3. Messgerät (1) nach Anspruch 1 oder 2, **gekennzeichnet durch**
- einen lichtempfindlichen Referenz-Detektor (11) und
- eine Lichtabzweigeeinheit (12), die dazu ausgebildet ist, einen Teil des mittels der gepulsten Lichtquelle (6) erzeugten Lichtimpulses abzuzweigen und den Referenz-Detektor (11) mit dem abgezweigten Teil des Lichtimpulses zu beaufschlagen,
- wobei der lichtempfindliche Referenz-Detektor (11) dazu ausgebildet ist, basierend auf dem abgezweigten Teil des Lichtimpulses ein elektrisches Referenzsignal (S4) zu erzeugen, und
- wobei die Auswerteeinheit (10) dazu ausgebildet ist, das elektrische Referenzsignal (S4) beim Bestimmen der Messgröße zu berücksichtigen.

4. Messgerät (1) nach einem der vorhergehenden Ansprüche, **dadurch gekennzeichnet, dass**
- das Bandpassfilter (8) ausschließlich passive Bauelemente aufweist.

5. Messgerät (1) nach einem der vorhergehenden Ansprüche, **dadurch gekennzeichnet, dass**
- der Verstärker (9) dazu ausgebildet ist, eine frequenzunabhängige Verstärkung durchzuführen.

6. Messgerät (1) nach einem der Ansprüche 1 bis 4, **dadurch gekennzeichnet, dass**
- das Bandpassfilter (8) mittels einer Rückkopplung innerhalb eines Verstärkungspfads des Verstärkers (9) gebildet ist.

7. Messgerät (1) nach einem der vorhergehenden Ansprüche, **dadurch gekennzeichnet, dass**
- eine Bandpassfilter-Zeitkonstante größer als eine Dauer des Lichtimpulses ist.

8. Messgerät (1) nach Anspruch 2, **dadurch gekennzeichnet, dass**
- das Bandpassfilter (8) und die Auswerteeinheit (10) durch einen digitalen Signalprozessor oder ein FPGA gebildet sind, wobei der digitale Signalprozessor oder das FPGA dazu ausgebildet ist, aus dem Filtereingangssignal eine zur Intensität des Lichts, das durch Beaufschlagen der Probe (5) mit dem Lichtimpuls bewirkt ist, proportionale Messgröße zu erzeugen.

9. Messgerät (1) nach einem der vorhergehenden Ansprüche, **dadurch gekennzeichnet, dass**
- die Auswerteeinheit (10) dazu ausgebildet ist, das Filterausgangssignal (S2) und/oder das Verstärkerausgangssignal (S3) derart zum Bestimmen der Messgröße auszuwerten, dass die Messgröße von einem Maximum des Filterausgangssignals (S2) und/oder des Verstärkerausgangssignals (S3) abhängig ist.

10. Messgerät (1) nach einem der vorhergehenden Ansprüche, **dadurch gekennzeichnet, dass**
- das Messgerät (1) dazu ausgebildet ist, den Verstärker (9) und/oder das Bandpassfilter (8) und/oder die Auswerteeinheit (10) nur für die Dauer des Lichtimpulses zu aktivieren.

11. Messgerät (1) nach einem der vorhergehenden Ansprüche, **gekennzeichnet durch**
- mehrere parallel geschaltete Verstärker (9_1 bis 9_n) mit unterschiedlichen Verstärkungsfaktoren zur Erzeugung einer Menge von unterschiedlich verstärkten Verstärkerausgangssignalen und
- eine mit den Verstärkern (9_1 bis 9_n) gekoppelte Auswahlschaltung (17), die dazu ausgebildet ist, dasjenige Verstärkerausgangssignal aus der Menge von Verstärkerausgangssignalen zum Bestimmen der Messgröße auszuwählen und zur Weiterverarbeitung weiterzuleiten, das unter den Verstärkerausgangssignalen, die nicht übersteuert sind, die größte Verstärkung aufweist.

12. Messgerät (1) nach einem der vorhergehenden Ansprüche, **dadurch gekennzeichnet, dass**
- der lichtempfindliche Mess-Detektor (7) und/oder der lichtempfindliche Referenz-Detektor (11) ein Photomultiplier oder ein Halbleiterphotosensor ist, und/oder
- die gepulste Lichtquelle (6) eine Gasentladungslampe oder ein gepulster Laser ist.

13. Verfahren zum Bestimmen einer Messgröße mittels eines Messgeräts (1) nach einem der vorhergehenden Ansprüche mit den Schritten:
a) Beaufschlagen einer in einem Probengefäß (4) einer Mikroplatte (3) angeordneten Probe (5) mit mindestens einem Lichtimpuls, und
b) Umwandeln von Licht, das durch Beaufschlagen der Probe (5) mit dem Lichtimpuls bewirkt ist, in ein elektrisches Messsignal (S1),
c) Impulsformen des elektrischen Messsignals (S1) mittels elektrischem Bandpassfiltern und elektrischem Verstärken des elektrischen Messsignals (S1), wobei das Bandpassfiltern mit Filterparametern durchgeführt wird, die von einer Dauer des mindestens einen Lichtimpulses abhängen, und
d) Auswerten des impulsgeformten Messsignals zum Bestimmen der Messgröße.

## Claims

1. Measuring device (1), in particular in the form of a fluorometer, absorption photometer, absorption spectrometer or multilabel reader, comprising:
- a transport unit (2) for a microplate (3), the microplate (3) comprising a number of sample vessels (4) containing samples (5) to be analyzed, the transport unit (2) being configured to move the samples (5) contained in the sample vessels (4) sequentially into a measurement position,
- at least one pulsed light source (6) configured to apply at least one light pulse to a sample (5) situated in the measurement position, and
- at least one light-sensitive measurement detector (7) configured to convert light caused by the light pulse having been applied to the sample (5) into an electrical measurement signal (S1),
**characterized by**
- at least one electrical bandpass filter (8), the filter parameters of which are dependent on a duration of the at least one light pulse, the electrical bandpass filter (8) being configured to filter a filter input signal depending on the filter parameters in order to generate a filter output signal (S2), the filter input signal being the measurement signal (S1),
- at least one electrical amplifier (9) configured to amplify an amplifier input signal (S2) in order to generate an amplifier output signal (S3), the amplifier input signal being the filter output signal, and
- an evaluation unit (10) configured to evaluate the amplifier output signal (S3) in order to determine a measurement variable.

2. Measuring device (1), in particular in the form of a fluorometer, absorption photometer, absorption spectrometer or multilabel reader, comprising:
- a transport unit (2) for a microplate (3), the microplate (3) comprising a number of sample vessels (4) containing samples (5) to be analyzed, the transport unit (2) being configured to move the samples (5) contained in the sample vessels (4) sequentially into a measurement position,
- at least one pulsed light source (6) configured to apply at least one light pulse to a sample (5) situated in the measurement position, and
- at least one light-sensitive measurement detector (7) configured to convert light caused by the light pulse having been applied to the sample (5) into an electrical measurement signal (S1),
**characterized by**
- at least one electrical amplifier configured to amplify an amplifier input signal in order to generate an amplifier output signal, the amplifier input signal being the measurement signal,
- at least one electrical bandpass filter, the filter parameters of which are dependent on a duration of the at least one light pulse, the electrical bandpass filter being configured to filter a filter input signal depending on the filter parameters in order to generate a filter output signal, the filter input signal being the amplifier output signal, and
- an evaluation unit configured to evaluate the filter output signal in order to determine a measurement variable.

3. Measuring device (1) according to Claim 1 or 2, **characterized by**
- a light-sensitive reference detector (11) and
- a light branching unit (12) configured to branch off a part of the light pulse generated by means of the pulsed light source (6) and to apply the branched-off part of the light pulse to the reference detector (11),
- the light-sensitive reference detector (11) being configured to generate an electrical reference signal (S4) on the basis of the branched-off part of the light pulse, and
- the evaluation unit (10) being configured to take account of the electrical reference signal (S4) when determining the measurement variable.

4. Measuring device (1) according to any of the preceding claims, **characterized in that**
- the bandpass filter (8) comprises exclusively passive components.

5. Measuring device (1) according to any of the preceding claims, **characterized in that**
- the amplifier (9) is configured to carry out a frequency-independent amplification.

6. Measuring device (1) according to any of Claims 1 to 4, **characterized in that**
- the bandpass filter (8) is formed by means of a feedback within an amplification path of the amplifier (9).

7. Measuring device (1) according to any of the preceding claims, **characterized in that**
- a bandpass filter time constant is greater than a duration of the light pulse.

8. Measuring device (1) according to Claim 2, **characterized in that**
- the bandpass filter (8) and the evaluation unit (10) are formed by a digital signal processor or an FPGA, the digital signal processor or the FPGA being configured to generate from the filter input signal a measurement variable proportional to the intensity of the light caused by the light pulse having been applied to the sample (5).

9. Measuring device (1) according to any of the preceding claims, **characterized in that**
- the evaluation unit (10) is configured to evaluate the filter output signal (S2) and/or the amplifier output signal (S3) in order to determine the measurement variable in such a way that the measurement variable is dependent on a maximum of the filter output signal (S2) and/or of the amplifier output signal (S3).

10. Measuring device (1) according to any of the preceding claims, **characterized in that**
- the measuring device (1) is configured to activate the amplifier (9) and/or the bandpass filter (8) and/or the evaluation unit (10) only for the duration of the light pulse.

11. Measuring device (1) according to any of the preceding claims, **characterized by**
- a plurality of amplifiers (9_1 to 9_n) connected in parallel and having different gain factors for generating a set of differently amplified amplifier output signals, and
- a selection circuit (17) coupled to the amplifiers (9_1 to 9_n) and configured to select for the purpose of determining the measurement variable and to forward for the purpose of further processing that amplifier output signal from the set of amplifier output signals which has the highest gain among the amplifier output signals that are not overdriven.

12. Measuring device (1) according to any of the preceding claims, **characterized in that**
- the light-sensitive measurement detector (7) and/or the light-sensitive reference detector (11) are/is a photomultiplier or a semiconductor photosensor, and/or
- the pulsed light source (6) is a gas discharge lamp or a pulsed laser.

13. Method for determining a measurement variable by means of a measuring device (1) according to any of the preceding claims, comprising the following steps:
a) applying at least one light pulse to a sample (5) arranged in a sample vessel (4) of a microplate (3), and
b) converting light caused by the light pulse having been applied to the sample (5) into an electrical measurement signal (S1),
c) pulse shaping of the electrical measurement signal (S1) by means of electrical bandpass filtering and electrical amplification of the electrical measurement signal (S1), the bandpass filtering being carried out with filter parameters that are dependent on a duration of the at least one light pulse, and
d) evaluating the pulse-shaped measurement signal in order to determine the measurement variable.

## Revendications

1. Appareil de mesure (1), en particulier sous la forme d'un fluoromètre, d'un photomètre à absorption, d'un spectromètre à absorption ou de lecteurs multimode, présentant :
- une unité de transport (2) destinée à une microplaque (3), la microplaque (3) présentant un certain nombre de puits (4) contenant des échantillons (5) à analyser, l'unité de transport (2) étant réalisée pour déplacer les échantillons (5) contenus dans les puits (4) séquentiellement dans une position de mesure,
- au moins une source de lumière pulsée (6) qui est réalisée pour exposer un échantillon (5) se trouvant dans la position de mesure à au moins une impulsion de lumière, et
- au moins un détecteur de mesure photosensible (7) qui est réalisé pour convertir la lumière provoquée par l'exposition de l'échantillon (5) à l'impulsion de lumière en un signal de mesure électrique (S1),
**caractérisé par**
- au moins un filtre passe-bande électrique (8) dont les paramètres de filtrage dépendent d'une durée de ladite au moins une impulsion de lumière, le filtre passe-bande électrique (8) étant réalisé pour filtrer un signal d'entrée de filtre en fonction des paramètres de filtrage afin de produire un signal de sortie de filtre (S2), le signal d'entrée de filtre étant le signal de mesure (S1),
- au moins un amplificateur électrique (9) qui est réalisé pour amplifier un signal d'entrée d'amplificateur (S2) afin de produire un signal de sortie d'amplificateur (S3), le signal d'entrée d'amplificateur étant le signal de sortie de filtre, et
- une unité d'évaluation (10) qui est réalisée pour évaluer le signal de sortie d'amplificateur (S3) afin de déterminer une grandeur de mesure.

2. Appareil de mesure (1), en particulier sous la forme d'un fluoromètre, d'un photomètre à absorption, d'un spectromètre à absorption ou de lecteurs multimode, présentant :
- une unité de transport (2) destinée à une microplaque (3), la microplaque (3) présentant un certain nombre de puits (4) qui contiennent des échantillons (5) à analyser, l'unité de transport (2) étant réalisée pour déplacer les échantillons (5) contenus dans les puits (4) séquentiellement dans une position de mesure,
- au moins une source de lumière pulsée (6) qui est réalisée pour exposer un échantillon (5) se trouvant dans la position de mesure à au moins une impulsion de lumière, et
- au moins un détecteur de mesure photosensible (7) qui est réalisé pour convertir la lumière provoquée par l'exposition de l'échantillon (5) à l'impulsion de lumière en un signal de mesure électrique (S1),
**caractérisé par**
- au moins un amplificateur électrique qui est réalisé pour amplifier un signal d'entrée d'amplificateur afin de produire un signal de sortie d'amplificateur, le signal d'entrée d'amplificateur étant le signal de mesure,
- au moins un filtre passe-bande électrique dont les paramètres de filtrage dépendent d'une durée de ladite au moins une impulsion de lumière, le filtre passe-bande électrique étant réalisé pour filtrer un signal d'entrée de filtre en fonction des paramètres de filtrage afin de produire un signal de sortie de filtre, le signal d'entrée de filtre étant le signal de sortie d'amplificateur, et
- une unité d'évaluation qui est réalisée pour évaluer le signal de sortie de filtre afin de déterminer une grandeur de mesure.

3. Appareil de mesure (1) selon la revendication 1 ou 2, **caractérisé par**
- un détecteur de référence photosensible (11), et
- une unité de dérivation de lumière (12) qui est réalisée pour dériver une partie de l'impulsion de lumière produite au moyen de la source de lumière pulsée (6) et pour exposer le détecteur de référence (11) à la partie dérivée de l'impulsion de lumière,
- le détecteur de référence photosensible (11) étant réalisé pour produire un signal de référence électrique (S4) sur la base de la partie dérivée de l'impulsion de lumière, et
- l'unité d'évaluation (10) étant réalisée pour tenir compte du signal de référence électrique (S4) lors de la détermination de la grandeur de mesure.

4. Appareil de mesure (1) selon l'une quelconque des revendications précédentes, **caractérisé en ce que**
- le filtre passe-bande (8) ne présente que des composants passifs.

5. Appareil de mesure (1) selon l'une quelconque des revendications précédentes, **caractérisé en ce que**
- l'amplificateur (9) est réalisé pour effectuer une amplification indépendante de la fréquence.

6. Appareil de mesure (1) selon l'une quelconque des revendications 1 à 4, **caractérisé en ce que**
- le filtre passe-bande (8) est formé au moyen d'une rétroaction à l'intérieur d'un trajet d'amplification de l'amplificateur (9).

7. Appareil de mesure (1) selon l'une quelconque des revendications précédentes, **caractérisé en ce que**
- une constante de temps de filtre passe-bande est supérieure à une durée de l'impulsion de lumière.

8. Appareil de mesure (1) selon la revendication 2, **caractérisé en ce que**
- le filtre passe-bande (8) et l'unité d'évaluation (10) sont formés par un processeur de signal numérique ou un FPGA, le processeur de signal numérique ou le FPGA étant réalisé pour produire à partir du signal d'entrée de filtre une grandeur de mesure proportionnelle à l'exposition de l'échantillon (5) à l'impulsion de lumière.

9. Appareil de mesure (1) selon l'une quelconque des revendications précédentes, **caractérisé en ce que**
- l'unité d'évaluation (10) est réalisée pour évaluer le signal de sortie de filtre (S2) et/ou le signal de sortie d'amplificateur (S3) pour déterminer la grandeur de mesure de telle sorte que la grandeur de mesure dépend d'un maximum du signal de sortie de filtre (S2) et/ou du signal de sortie d'amplificateur (S3) .

10. Appareil de mesure (1) selon l'une quelconque des revendications précédentes, **caractérisé en ce que**
- l'appareil de mesure (1) est réalisé pour activer l'amplificateur (9) et/ou le filtre passe-bande (8) et/ou l'unité d'évaluation (10) uniquement pendant la durée de l'impulsion de lumière.

11. Appareil de mesure (1) selon l'une quelconque des revendications précédentes, **caractérisé par**
- plusieurs amplificateurs connectés en parallèle (9_1 à 9_n) ayant différents facteurs de gain afin de produire une quantité de signaux de sortie d'amplificateur amplifiés différemment, et
- un circuit de sélection (17) couplé aux amplificateurs (9_1 à 9_n) et réalisé pour sélectionner dans la quantité de signaux de sortie d'amplificateur servant à déterminer la grandeur de mesure le signal de sortie d'amplificateur qui présente le gain le plus élevé parmi les sorties d'amplificateur qui ne sont pas saturées et pour le retransmettre en vue d'un traitement ultérieur.

12. Appareil de mesure (1) selon l'une quelconque des revendications précédentes, **caractérisé en ce que**
- le détecteur de mesure photosensible (7) et/ou le détecteur de référence photosensible (11) est un photomultiplicateur ou un capteur photoélectrique à semi-conducteur, et/ou
- la source de lumière pulsée (6) est une lampe à décharge de gaz ou un laser pulsé.

13. Procédé permettant de déterminer une grandeur de mesure au moyen d'un appareil de mesure (1) selon l'une quelconque des revendications précédentes, comprenant les étapes consistant à :
a) exposer un échantillon (5) disposé dans un puits (4) d'une microplaque (3) à au moins une impulsion de lumière, et
b) convertir la lumière qui est provoquée par l'exposition de l'échantillon (5) à l'impulsion de lumière en signal de mesure électrique (S1),
c) conformer en impulsion le signal de mesure électrique (S1) par filtrage passe-bande électrique et amplification électrique du signal de mesure électrique (S1), le filtrage passe-bande étant effectué avec des paramètres de filtrage qui dépendent d'une durée de ladite au moins une impulsion de lumière, et
d) évaluer le signal de mesure conformé en impulsion pour déterminer la grandeur de mesure.
